# EUROPÄISCHE PATENTSCHRIFT

(11) **EP 4 177 107 B1**
(45) Veröffentlichungstag und Bekanntmachung des Hinweises auf die Patenterteilung: **21.01.2026**
(21) Anmeldenummer: 21207129.4
(22) Anmeldetag: 09.11.2021
(51) Int. Cl.: B60Q 1/08

(54) **VERFAHREN ZUR BEREITSTELLUNG EINER AN SICHTVERHÄLTNISSE ANGEPASSTEN BELEUCHTUNG**
METHOD FOR PROVIDING ILLUMINATION ADAPTED TO VISIBILITY CONDITIONS
PROCÉDÉ DE FOURNITURE D'UN ÉCLAIRAGE AJUSTÉ À LA VISIBILITÉ

(43) Veröffentlichungstag der Anmeldung: 10.05.2023
(73) Patentinhaber: VOLKSWAGEN AKTIENGESELLSCHAFT, 38440 Wolfsburg (DE)
(72) Erfinder: Bennemann, Mark, 14612 Falkensee (DE)

(56) Entgegenhaltungen:
- WO-A1-01/01038
- WO-A1-2020/067497
- CN-U- 212 022 470
- DE-A1- 102020 132 102
- US-A1- 2010 021 011
- US-A1- 2019 094 136
- US-A1- 2022 034 469

## Beschreibung

Die Erfindung betrifft ein Verfahren zur Bereitstellung einer an die Sichtverhältnisse angepassten Beleuchtung eines Fahrzeugs mit einer Beleuchtungseinrichtung, die eine Beleuchtung mittels einzeln ansteuerbarer Lichtpunkte bereitstellt sowie ein Fahrzeug, das mit einem System ausgerüstet ist, um dieses Verfahren auszuführen. Anhand erfasster Sichtverhältnisse, Fahrtinformationen und/oder zusätzlicher Umgebungsinformationen wird die Beleuchtung adaptiv hinsichtlich Lichtverteilung, mindestens einem Lichtschwerpunkt und/oder der Lichtintensität angepasst, um einen Fahrbahnverlauf prädiktiv anzuzeigen und/oder die Aufmerksamkeit eines Fahrers des Fahrzeugs zu beeinflussen.

Heutige Fahrzeuge sind mit Scheinwerfern und Nebelscheinwerfern ausgerüstet, die zu einer deutlich verbesserten Sichtbarkeit der Fahrbahn und zumindest teilweise auch der Umgebung bei schlechten Sichtverhältnissen, wie sie bei Regen, Schnee, Nebel und Gischt auftreten, beitragen. Fahrzeuge ohne solche Nebelscheinwerfer können die Fahrbahn und die nähere Umgebung deutlich schlechter ausleuchten, was zu einem erheblichen Verlust an Sicherheit während der Fahrt führt. Gegebenenfalls muss eine Fahrt aufgrund der Sichtverhältnisse abgebrochen werden, wenn keine Nebelscheinwerfer am Fahrzeug vorhanden sind.

Die Entwicklung bei der Fahrzeugbeleuchtung geht heutzutage zunehmend in Richtung des sogenannten "digitalen Lichtes", bei dem das von einer oder mehreren Lichtquellen emittierte Licht mithilfe optischer Systeme in eine Vielzahl von Lichtpunkten aufgelöst werden kann, so dass einzelne Strahlprofile, die sich durch die Form des auf die Fahrbahn oder die Umgebung aufgebrachten Lichtstrahls, die Intensität des Lichtes, seine Verteilung, seine Farbe und dergleichen charakterisieren, ausgebildet werden können. Das digitale Licht kommt dabei sowohl für Scheinwerfer inklusive der Funktionalitäten von Fernlicht, Abblendlicht, Stadtlicht und Standlicht, aber auch für das Schlusslicht, Bremslicht, Rückfahrlicht und Blinklicht zum Einsatz.

Dabei wäre es wünschenswert, wenn auch die Funktion einer Nebelbeleuchtung, also sowohl nach vorn im Sinne eines Nebelscheinwerfers, als auch nach hinten im Sinne der Nebelschlussleuchte, mittels eines solchen digitalen Lichtes verwirklicht werden könnte, wobei diese Nebelbeleuchtung die aktuellen Sichtverhältnisse und vorzugsweise weitere Bedingungen aus der Umgebung des Fahrzeugs berücksichtigen soll. Besonders wünschenswert ist es dabei, wenn der Verlauf der Fahrbahn auch bei schlechten Sichtverhältnissen angezeigt werden könnte und der Fahrer des Fahrzeugs bei seiner Fahraufgabe unterstützt werden kann. Die Aufgabe der Erfindung liegt also darin, eine solche anpassbare Nebenbeleuchtung vorzuschlagen.

Im Stand der Technik sind dazu einige Lösungsansätze bekannt. So zeigt die WO 2020/067497 A1 einen Flächenlichtmodulator zur Beleuchtung einer Fahrzeugumgebung, der Bereiche höherer und geringerer Beleuchtungsintensität anhand von Fahrt- und Umgebungsinformationen ausbilden kann. In der DE 10 2020 132 102 A1 werden Strahlmuster eines LED-Arrays in Scheinwerfern abhängig von einem Zustand des Fahrers angepasst. WO 01/01038 A1 offenbart einen dynamischen Lichtstrom in Abhängigkeit von Umgebungsbedingungen und US 2019/094136 A1 offenbart, wie auf Basis einer Detektion einer Sichtbeeinträchtigung die Beleuchtung durch die Scheinwerfer angepasst werden kann.

Die Aufgabe der Erfindung wird gelöst mit einem Verfahren nach Anspruch 1 und einem Fahrzeug nach Anspruch 8. Weitere bevorzugte Ausgestaltungen der Erfindung ergeben sich aus den übrigen, in den Unteransprüchen genannten Merkmalen.

Ein erfindungsgemäßes Verfahren zur Bereitstellung einer an Sichtverhältnisse angepassten Beleuchtung eines Fahrzeugs mit einer Beleuchtungseinrichtung, die eine Beleuchtung mittels einzeln ansteuerbarer Lichtpunkte bereitstellt, sieht vor, dass mittels einer fahrzeugeigenen Umfelderkennung die Sichtverhältnisse während der Fahrt des Fahrzeugs erfasst werden und aus den erfassten Sichtverhältnissen, sowie Fahrtinformationen und/oder zusätzlichen Umgebungsinformationen die Beleuchtung adaptiv hinsichtlich einer Lichtverteilung, mindestens einem Lichtschwerpunkt und/oder einer Lichtintensität angepasst wird, um einen Fahrbahnverlauf prädiktiv anzuzeigen und/oder die Aufmerksamkeit eines Fahrers des Fahrzeugs zu beeinflussen. Das Verfahren zeichnet sich dadurch aus, dass die Anpassung der Beleuchtung an die Sichtverhältnisse unter Berücksichtigung eines Zustandes des Fahrers unter Verwendung von Informationen mobiler Endgeräte erfolgt und mittels einer Auswerteeinheit das Zusammenwirken von erfassten Sichtverhältnissen und Informationen zum Zustand des Fahrers, sowie Fahrtinformationen und/oder zusätzlichen Umgebungsinformationen mit der adaptiven Anpassung der Beleuchtung erfasst und ausgewertet wird, um anhand der Auswerteergebnisse die adaptive Anpassung der Beleuchtung zu optimieren.

Die Sichtverhältnisse bestimmen sich dabei vorrangig aus der Sichtweite, aber zumindest teilweise auch aus den bestehenden Lichtverhältnissen, also der Helligkeit beziehungsweise Dunkelheit sowie der bestehenden Ausleuchtung entlang der Fahrstrecke des Fahrzeugs. Sie werden unter anderem beeinflusst durch das vorherrschende Wetter während der Fahrt des Fahrzeugs und können sich lokal deutlich unterscheiden. Wesentliche Wettereinflüsse, die sich negativ auf die Sichtverhältnisse auswirken, bilden Regen, Schneefall bis hin zum Schneetreiben, Nebel und Gischt, ohne darauf beschränkt zu sein. Aber auch Sandstürme oder Verwehungen, bei denen Material wie Sand oder trockener Boden, feiner Staub oder dergleichen mitgeführt wird, kann sich negativ auf die Sichtverhältnisse auswirken. Ziel des erfindungsgemäßen Verfahrens ist es daher, die Sichtverhältnisse stetig zu überwachen und dynamisch darauf zu reagieren, so dass der Fahrer des Fahrzeugs bestmöglich unterstützt wird.

Diese Unterstützung soll durch eine Anpassung der Beleuchtung erfolgen. Beleuchtung meint dabei sowohl eine Beleuchtung in Fahrtrichtung nach vorn, als auch nach hinten. Nach vorn spielt eine angepasste Beleuchtung eine große Rolle für die Sicht des Fahrers, nach hinten für die Sichtbarkeit für den nachfolgenden Verkehr. Ohne darauf nachfolgend immer wieder hinzuweisen, soll stets mitgelesen werden, dass eine Beleuchtung nach vorn und/oder eine Beleuchtung nach hinten gemeint ist. Eine Anpassung der Beleuchtung soll sowohl das Ein- und Ausschalten der Beleuchtung einschließen, als auch die konkrete Einstellung der Beleuchtung, wie nachfolgend noch erläutert wird.

Um das erfindungsgemäße Verfahren zu verwenden, soll das Fahrzeug eine Beleuchtungseinrichtung aufweisen, die das Beleuchtungslicht mittels verschiedener optischer Vorrichtungen in Form von einzeln ansteuerbaren Lichtpunkten bereitstellt. Dazu ist eine Vielzahl von Verfahren und Vorrichtungen bekannt. Beispielhaft sei die Verwendung von LED-Matrizen, rotierenden Polygonspiegeln, von Spiegelarrays beziehungsweise Spiegelsystemen mit einzeln ansteuerbaren Mikrospiegeln, MEMS-Spiegelsystemen oder Flächenmodulatoren wie beispielsweise LCD-Systeme genannt. Diese und weitere Vorrichtungen stellen Licht bereit, bei dem die Form des emittierten Lichtstrahls und damit der ausgeleuchteten Fläche auf der Fahrbahn und der näheren Umgebung, die bereitgestellte Lichtintensität und/oder Lichtfarbe individuell beeinflusst werden kann. Das von derartigen Vorrichtungen bereitgestellt Licht wird auch als "digitales Licht" bezeichnet.

Basis für die Anpassung der Beleuchtung des Fahrzeugs an die Sichtverhältnisse ist die Erfassung eben dieser während der Fahrt mittels einer fahrzeugeigenen Umfelderkennung. Die fahrzeugeigene Umfelderkennung umfasst üblicherweise Sensoren und/oder Kameras, mit denen unter anderem eine Umgebungshelligkeit, eine Streuung von Licht an Regen, Schnee, Nebel oder Partikeln in der Luft und/oder eine Sichtweite bestimmt werden kann.

Die Umgebungshelligkeit beziehungsweise die Lichtverhältnisse wird/werden unter anderem durch das Wetter, aber auch durch die Umwelt rund um das Fahrzeug, die vom Fahrzeug bereitgestellte Beleuchtung sowie die Streuung des Lichts beeinflusst. Äußere Einflüsse können zum Beispiel die Geographie, wie beispielsweise die Lage der Fahrstrecke in einem Talkessel, durch Bäume wie in einer Allee, Durchfahrten durch einen Tunnel, enge Straßen in einem Stadtgebiet und dergleichen sein. Durch die Lage des Fahrortes kann dabei auch das Wetter lokal sehr begrenzt beeinflusst sein, wie beispielsweise durch lokale Nebelbänke in Flussnähe oder die Richtung fallenden Regens in der Nähe von Felswänden. Daher soll die Umgebungshelligkeit generell erfasst werden. Ebenfalls kann die Streuung von Licht an Nebel, Regen und/oder Schnee, sowie an Partikeln in der Luft, wie bei den oben angedeuteten Sandstürmen, oder dergleichen die Umgebungshelligkeit beeinflussen. Ziel ist eine prädiktive Bestimmung des Einflusses derartiger Einflussgrößen zur Anpassung der Beleuchtung.

Auch die vorhandene Sichtweite, vor allem die individuelle Sichtweite, beeinflusst die Sichtverhältnisse. Sie kann unter anderem durch fahrzeugeigene Kameras und Sensorik (also die fahrzeugeigene Umfelderkennung) bestimmt werden, mittels derer üblicherweise auch der Abstand zu anderen Verkehrsteilnehmern, Objekten und dergleichen bestimmt wird, also zum Beispiel Ultraschall, LIDAR oder RADAR. Ist die Sichtweite eingeschränkt, weil durch eine nasse Fahrbahn Gischt aufgewirbelt wird oder Nebel herrscht, wirkt sich das auf die Reichweite der Sensorik beziehungsweise der Kamera aus, so dass daraus eine Anpassung der Beleuchtung abgeleitet werden kann.

Neben der erfassten Sichtverhältnissen sollen zur Anpassung der Beleuchtung Fahrtinformationen und/oder zusätzliche Umgebungsinformationen herangezogen werden.

Fahrtinformationen umfassen beispielsweise Navigationsdaten, die Geschwindigkeit des Fahrzeugs, einen Abstand zu mindestens einem anderen Verkehrsteilnehmer und/oder eine Verkehrsdichte. Fahrtinformationen sind also Informationen, die die Fahrt des Fahrzeugs selbst und gegebenenfalls im Zusammenwirken mit dem umgebenden Verkehr beschreiben. Navigationsdaten beinhalten Kartendaten und damit unter anderem auch die Verläufe von Straßen und das Vorhandensein und die Position von Einmündungen oder Kreuzungen. Die mit den Navigationsdaten erstellte Routenplanung gibt dabei die geplante Fahrstrecke an und damit auch, wo der Fahrer abbiegen muss und dergleichen.

Die Geschwindigkeit des Fahrzeugs spielt für die Anpassung der Beleuchtung an die erfassten Sichtverhältnisse eine wichtige Rolle. Insbesondere die Anpassung der Intensität der Beleuchtung kann geschwindigkeitsabhängig gestaltet werden, so dass zum Beispiel mit steigender Geschwindigkeit des Fahrzeugs auch die Helligkeit der Beleuchtung erhöht wird, um die eigene Sichtweite und/oder die eigene Sichtbarkeit zu erhöhen.

Ein weiteres Kriterium kann der Abstand des Fahrzeugs zu weiteren Verkehrsteilnehmern sein. Dies zielt nicht nur auf die bessere Sichtbarkeit und/oder die eigene Sichtweite ab, sondern auch darauf, andere Verkehrsteilnehmer nicht zu blenden. Wird also während der Fahrt das Vorhandensein anderer Verkehrsteilnehmer erfasst, kann die Beleuchtung beispielsweise in ihrer Intensität angepasst werden. In Abhängigkeit von der Verkehrsdichte kann und sollte ebenfalls eine Anpassung der Beleuchtung erfolgen, um die anderen Verkehrsteilnehmer nicht zu blenden und dennoch ausreichend gut sichtbar zu sein.

Zusätzliche Umgebungsinformationen geben an, wie die Umwelt des Fahrzeugs beschaffen ist. Wie bereits angedeutet, beeinflusst die Umwelt unter anderem die Umgebungshelligkeit während der Fahrt, aber auch die Anforderungen an die Beleuchtung hinsichtlich Helligkeit, Reichweite und dergleichen. Umgebungsinformationen umfassen dabei die Geographie, wie beispielsweise die Lage der Fahrstrecke, die Art der Umgebung, also ob die Umgebung städtisch, ländlich oder eine Autobahn ist, den Straßentyp, die Bebauung und/oder Bepflanzung entlang der Fahrstrecke und kann auch Wetterdaten umfassen. Eine zusätzliche Umgebungsinformation kann auch einen Zustand der Fahrbahn umfassen, insbesondere wenn diese Schäden wie Schlaglöcher aufweist, die die Fahrt des Fahrzeugs beeinträchtigen und gefährden können.

Die erfassten Sichtverhältnisse, sowie die Fahrtinformationen und/oder die zusätzlichen Umgebungsinformationen werden herangezogen, um die Beleuchtung des Fahrzeugs adaptiv, also situationsabhängig anzupassen und zwar im Hinblick auf die Lichtverteilung, mindestens einen Lichtschwerpunkt und/oder die Lichtintensität. Die Sichtverhältnisse und weiteren Informationen werden also kontinuierlich oder zumindest in ausreichend kurzen Zeitabständen erfasst und ausgewertet, um die Sichtverhältnisse und die darauf wirkenden Einflüsse ständig bewerten und damit die Beleuchtung permanent anpassen zu können. Dies ist bedeutsam, weil sich die Sichtverhältnisse lokal stark unterscheiden können und somit innerhalb kurzer Zeit verändern können. Beispielhaft sei dabei auf Nebelbänke verwiesen, die lokal sehr begrenzt sein können und eine zügige Anpassung der Beleuchtung des Fahrzeugs wünschenswert machen.

Die Anpassung der Beleuchtung schließt dabei die Lichtverteilung, mindestens einen Lichtschwerpunkt und/oder die Lichtintensität ein. Die Lichtverteilung soll dabei als die Ausdehnung und Form des Lichtkegels, der durch eine Beleuchtungseinrichtung emittiert wird, verstanden werden. Aus der Ausdehnung ergibt sich dabei auch die Reichweite des Lichtkegels beziehungsweise der Ausleuchtung.

Ein Lichtschwerpunkt soll ein Bereich sein, an dem die Intensität des Lichtes höher ist als im unmittelbar umgebenden Bereich der Ausleuchtung und/oder in dem durch eine Lichtfarbe oder eine andere Ausgestaltung der Beleuchtung, wie beispielsweise eine Projektion auf die Fahrbahn oder ein Objekt, eine besondere Wirkung der Beleuchtung bewirkt werden kann, insbesondere eine Markierung von Objekten und/oder Gefahrenstellen, durch die die Aufmerksamkeit des Fahrers gelenkt werden soll, um seine Fahrt anzupassen. Es ist aber auch sinnvoll, bei schlechten Sichtverhältnissen, den oder mindestens einen Lichtschwerpunkt näher vor das Fahrzeug zu verlegen, damit der Fahrer zumindest seine unmittelbare Umgebung besser erfassen kann. Ebenso kann es sinnvoll sein, mehrere Lichtschwerpunkte bereitzustellen, beispielsweise um Straßenschäden zu markieren und gleichzeitig den Straßenverlauf anzuzeigen.

Die Lichtintensität, die Farbe des Lichts und optional auch der zeitliche Verlauf von dessen Bereitstellung im Sinne eines Pulsierens oder als gleichmäßig anhaltende beziehungsweise durchgängige Beleuchtung sollen nachfolgend auch unter dem Begriff "Lichtwert" zusammengefasst werden.

Alternativ oder zusätzlich soll die Lichtintensität angepasst werden, was am ehesten mit einer Anpassung der Helligkeit einhergeht. Die Anpassung der Intensität des Lichtes schließt ausdrücklich auch das Anschalten beziehungsweise Ausschalten der Beleuchtungseinrichtung(en) ein.

Die Anpassung der vorgenannten Parameter soll dabei so gewählt sein, dass der Verlauf der Fahrbahn prädiktiv angezeigt wird und/oder die Aufmerksamkeit des Fahrers beeinflusst wird. Die prädiktive Anzeige des Fahrbahnverlaufes zielt darauf ab, dem Fahrer auch bei sehr schlechten Sichtverhältnissen anzuzeigen, wo die Straße verläuft, so dass er der Straße folgen kann, auch wenn die Sichtweite möglicherweise sehr eingeschränkt ist. Insbesondere kann damit schon frühzeitig ein Kurvenverlauf angezeigt werden.

Die Beeinflussung der Aufmerksamkeit des Fahrers soll vor allem deren Erhöhung und die räumliche Ausrichtung seiner Aufmerksamkeit bewirken. Der Fahrer soll also darauf hingewiesen werden, dass eine erhöhte Aufmerksamkeit erforderlich ist oder sein könnte und wohin er diese vorzugweise richten soll. Beispielsweise kann so die Aufmerksamkeit des Fahrers auf eine Kreuzung oder eine Einmündung gerichtet werden, an die er sich annähert.

Weiterhin erfolgt die Anpassung der Beleuchtung an die Sichtverhältnisse unter Berücksichtigung eines Zustandes des Fahrers. Der Zustand des Fahrers beeinflusst seine Fahrtauglichkeit und auch seinen Umgang mit erschwerten oder eingeschränkten Sichtverhältnissen. Der Zustand des Fahrers wird unter anderem durch Stress, Müdigkeit und seine Wahrnehmung der Umgebung, also auch die individuell wahrgenommenen Sichtverhältnisse beeinflusst. So können letztere einen Fahrer ängstigen, wodurch seine Fahrweise beeinträchtigt wird.

Der Zustand des Fahrers kann beispielsweise durch eine Innenraumbeobachtung des Fahrzeugs, wie sie an sich bekannt ist, erfasst werden. So lässt sich aus wiederholtem Gähnen, Zusammenkneifen der Augen und/oder einer zusammengesunkenen Körperhaltung auf Müdigkeit seitens des Fahrers schließen. Ein Vorneigen und Zusammenkneifen der Augen kann auf eine (zu) geringe Sichtweite schließen lassen. Auch Sensorik, beispielsweise am Lenkrad, kann einen Zustand des Fahrers erfassen, beispielsweise seinen Herzschlag oder eine Schweißabgabe, die auf Stress und/oder Angst schließen lassen. Auch das Fahrverhalten selbst, beispielsweise ein Abkommen von der Fahrspur oder eine unruhige Fahrweise, lassen Rückschlüsse auf den Zustand des Fahrers zu.

Neben der Erfassung des Zustandes des Fahrers aus seinem Verhalten und/oder seiner Fahrweise, helfen Daten mobiler Endgeräte des Fahrers, seinen Zustand abzuschätzen. So kann eine Auswertung des Kalenders beziehungsweise des Tagesverlaufs des Fahrers auf seinem Smartphone einen Anhaltspunkt zu seinem Zustand geben. Beispielsweise können eine hohe Anzahl von Terminen auf Stress und/oder Müdigkeit hindeuten, ebenso wie eine große zeitliche Spanne, in der der Fahrer an diesem Tag bereits aktiv war. Mobile Endgeräte können auch Smartwatches oder Fitnesstracker umfassen, die Gesundheitsdaten erfassen und auswerten und damit den Zustand des Fahrers ermitteln. Sie können beispielsweise Informationen zu Schlafdauer, Herzschlag und dergleichen bereitstellen und auswerten.

Selbstverständlich soll die Einbeziehung der Daten von mobilen Endgeräten optional und nur mit Einverständnis des Fahrers erfolgen.

Ist der Zustand des Fahrers bekannt, kann die Beleuchtung nun hinsichtlich ihrer Lichtverteilung, dem mindestens einen Lichtschwerpunkt und/oder der Lichtintensität angepasst werden. Ist ein Fahrer beispielsweise müde, kann eine frühzeitige und wiederholte Warnung vor Gefahrenstellen mittels der Beleuchtung, insbesondere mit einer zeitlichen Variation in der Markierung von Objekten und/oder Gefahrenstellen angeraten sein. Auch kann einer Anpassung der Lichtfarbe zu einem erhöhten Blauanteil der Müdigkeit entgegenwirken. Bei Stress kann der Wechsel hin zu einer beruhigenden Lichtfarbe hilfreich sein, um das Stresslevel zu senken. Eine höhere Lichtintensität und eine flächig größere Lichtverteilung kann eine verbesserte Ausleuchtung vor dem Fahrzeug bewirken und somit die individuell wahrgenommene Sichtweite verbessern.

Außerdem wird für das erfindungsgemäße Verfahren mittels einer Auswerteeinheit das Zusammenwirken von erfassten Sichtverhältnissen, den Informationen zum Zustand des Fahrers, sowie Fahrtinformationen und/oder zusätzlichen Umgebungsinformationen mit der adaptiven Anpassung der Beleuchtung erfasst und ausgewertet, um anhand der Auswerteergebnisse die adaptive Anpassung der Beleuchtung zu optimieren.

Wie bereits ausgeführt, werden die Sichtverhältnisse sowie Fahrtinformationen und/oder zusätzliche Umgebungsinformationen permanent überwacht und die Beleuchtung stetig angepasst. Damit kann auch erfasst werden, wie eine Anpassung der Beleuchtung die Sichtverhältnisse beeinflusst, insbesondere unter Berücksichtigung der Fahrtinformationen und/oder zusätzliche Umgebungsinformationen.

So kann beispielsweise einer Erhöhung der Lichtintensität bei Nebel kontraproduktiv sein, wenn sie wegen der Streuung an der Feuchtigkeit in der Luft zu einer Eigenblendung des Fahrers führt, die wiederum zu Stress bei diesem führt. Führt andererseits die prädiktive Anzeige des Fahrbahnverlaufs und eine gleichzeitig erfolgende gute Ausleuchtung der übrigen Fahrbahn dazu, dass der Fahrer sich sicher fühlt, kann dies an den Fahrtinformationen, beispielsweise seiner Geschwindigkeit und/oder Fahrweise, Umgebungsinformationen sowie an seinem Zustand erkannt werden.

Die Auswertung der Auswirkungen der Beleuchtungsanpassung, sei es anhand des Zustands des Fahrers oder seinen Reaktionen und/oder der im Nachgang einer Beleuchtungsanpassung ermittelten Sichtverhältnisse, Umgebungs- und/oder Fahrtinformationen, erfolgt durch die Erfassung der relevanten Informationen beziehungsweise Beobachtung mittels der vorstehend bereits ausgeführten Erfassungsmöglichkeiten, sowie die Auswertung der jeweiligen Informationen und die Dokumentation der Ergebnisse der Gesamtauswirkungen mit jeweiligem zeitlichen Bezug zu den bereits erfolgten Anpassungen und in Abhängigkeit von den dabei herrschenden Sichtverhältnissen. Die Ergebnisse der Auswertungen werden dabei zumindest zeitweise gespeichert.

Eine solche Auswertung erlaubt damit eine Einschätzung, ob die gewählte(n) Anpassung(en) positive oder negative Auswirkungen auf die Fahrt und den Fahrer sowie die Sichtverhältnisse, insbesondere die individuell wahrgenommenen Sichtverhältnisse, hatte(n), ob die gewählte(n) Anpassung(en) gemessen an den Gesamtumständen also wiederholt werden kann (können) oder sollte(n) oder nicht. Hatte eine zuvor gewählte Anpassung einen negativen Einfluss, ergibt die hier beschriebene Auswertung, dass zukünftig bei gleichen Umständen eine andere Anpassung erfolgen soll beziehungsweise muss. Ergibt die Auswertung einen positiven Einfluss einer erfolgten Beleuchtungsanpassung, lassen jedoch erkennen, dass eine weitere Verbesserung möglich ist, kann eine Variation der Beleuchtungsanpassung und ihre stetige Anpassung und Nachregelung zu einer Optimierung der Beleuchtungsanpassung beitragen.

Die Auswertung erfolgt dabei mittels einer Auswerteeinheit, die damit eine übergeordnete Instanz oder "Intelligenz" bildet und aus der Auswertung heraus eine Optimierung der Beleuchtungsanpassung ausführt. Die Auswerteeinheit kann Teil der bereits benannten Steuereinrichtung oder in dieser implementiert sein oder separat vorgesehen sein. Zusammengefasst lernt das System also, die bestmögliche Anpassung für die jeweiligen Sichtverhältnisse bei der aktuellen Fahrt und Umgebung zu wählen.

Durch das derart gestaltete erfindungsgemäße Verfahren kann eine individuelle, situationsabhängige Anpassung der Beleuchtung eines Fahrzeugs mit einem sogenannten digitalen Licht an die Witterungsverhältnisse, insbesondere eingeschränkte Sichtverhältnisse erfolgen, wie sie sich aus Regen, Schnee, Gischt und vor allem Nebel ergeben und damit ein zusätzlicher Funktionsgewinn generiert werden. Dadurch kann auf eine separate Einrichtung von Nebelscheinwerfern oder Nebelschlussleuchten verzichtet werden, wodurch Kosten und Bauraum eingespart werden kann und auch gestalterische Zwänge im Erscheinungsbild eines Fahrzeugs reduziert werden können.

Mit dem erfindungsgemäßen Verfahren kann und soll also ausdrücklich auch die Funktionalität einer Nebelbeleuchtung eines Fahrzeugs nachgebildet werden. Auch können Zwischenzustände in der Beleuchtung ausgebildet werden, die eine Anpassung an die vorherrschenden Sichtverhältnisse erlauben. Durch die aktive, dynamische Anpassung der Beleuchtung während der Fahrt des Fahrzeugs wird ein Sicherheitsgewinn für den Fahrer des Fahrzeugs, aber auch andere Verkehrsteilnehmer erreicht, weil für den Fahrer die Sicht, für die anderen Verkehrsteilnehmer die Sichtbarkeit des Fahrzeugs verbessert wird. Da das Verfahren vorzugsweise als Softwarelösung bereitgestellt werden kann, wird auch ein Nachrüsten von Fahrzeugen, deren Beleuchtungsvorrichtungen dafür geeignet sind, erfolgen.

Die Verwirklichung des Verfahrens kann durch eine Steuereinrichtung erfolgen, die dafür vorgesehen ist, oder durch eine bereits im Fahrzeug vorgesehene Steuereinrichtung, die ausgebildet und eingerichtet ist, das erfindungsgemäße Verfahren auszuführen, also die notwendigen Informationen (Sichtverhältnisse sowie Fahrtinformationen und/oder zusätzliche Umgebungsfunktionen) auszuwerten und anhand der Auswertung die Beleuchtungseinrichtungen anzusteuern, so dass sie die gemäß dem erfindungsgemäßen Verfahren angepasste Beleuchtung bereitstellen.

Gemäß einer ersten Ausgestaltung des erfindungsgemäßen Verfahrens sollen Fahrtinformationen und/oder Umgebungsinformationen durch mindestens ein fahrzeugeigenes System erfasst und bereitgestellt werden und/oder mit externen Systemen ausgetauscht werden.

Fahrzeugeigene Systeme können Sensoren und/oder Kameras umfassen, aber auch Steuereinrichtungen und/oder Auswerteeinrichtungen des Fahrzeuges, mit denen die Fahrt des Fahrzeuges gesteuert und/oder überwacht wird. So kann mittels einer Einrichtung zur Bestimmung einer Position des Fahrzeugs, wie zum Beispiel einem GPS-Empfänger, die Position des Fahrzeugs bestimmt werden. Die Geschwindigkeit des Fahrzeugs kann ebenfalls anhand von Positionsdaten, aber auch aus der fahrzeugeigenen Überwachung beziehungsweise Steuerung übernommen werden. Informationen bezüglich der Art der Umgebung oder ihrer Bebauung lässt sich durch lokal gespeicherte Karten- oder Navigationsdaten einbeziehen. Um das Vorhandensein anderer Verkehrsteilnehmer zu bestimmen, können fahrzeugeigene Sensorik beziehungsweise Systeme, wie Ultraschall, LIDAR, RADAR oder Kameras, verwendet werden. Aus der Anzahl vorhandener Verkehrsteilnehmer in der näheren Umgebung des Fahrzeugs kann auf die Verkehrsdichte rückgeschlossen werden.

Fahrtinformationen und/oder Umgebungsinformationen können mit einem oder mehreren fahrzeugeigenen System(en) erfasst und an die Steuereinrichtung übermittelt werden, die die Anpassung der Beleuchtung gemäß dem erfindungsgemäßen Verfahren ausführt.

Alternativ oder zusätzlich können Fahrtinformationen und/oder zusätzliche Umgebungsinformationen mit externen Systemen ausgetauscht werden. Dazu können insbesondere die so genannte C2C-Kommunikation oder C2X-Kommunikation (C2C - Car to Car, Kommunikation zwischen Fahrzeugen, C2X - Kommunikation zwischen Fahrzeug und der Umgebung, beispielsweise der Infrastruktur) verwendet werden. Auf diesem Wege kann beispielsweise die Verkehrsdichte im Umfeld des Fahrzeugs bestimmt und berücksichtigt werden. Die Informationen bei der C2X-Kommunikation kann dabei beispielweise an Ampeln, Brücken, Verkehrszeichenbrücken und dergleichen bereitgestellt werden. Die Bereitstellung von Fahrtinformationen und/oder zusätzlichen Umgebungsinformationen kann auch über serverbasierte Dienstleistungen oder sogenannte Cloudsysteme erfolgen.

Eine mit einem ersten fahrzeugeigenen System erfasste Information kann optional durch die Erfassung eines anderen fahrzeugeigenen Systems und/oder durch einen Austausch mit externen Systemen verifiziert werden und umgekehrt.

Der Austausch mit externen Systemen erlaubt es auch, seitens des Fahrzeuges Informationen an andere Verkehrsteilnehmer beziehungsweise die Umgebung zu übermitteln, beispielsweise bezüglich der Sichtweite, der Sichtverhältnisse, der Verkehrsdichte, einer bestehenden Blendung durch einen anderen Verkehrsteilnehmer und so weiter. Dies gilt auch für die Erfassung der zuvor schon benannten Fahrbahnzustandserfassung. So kann ein Fahrzeug Schäden übermitteln, die es erfasst hat, so dass andere Verkehrsteilnehmer gewarnt werden können.

In einer zweiten Ausgestaltung des Verfahrens wird die Beleuchtung angepasst, um Objekte und/oder Gefahrenstellen zu markieren, wobei die Markierung mittels Anpassung der Lichtintensität, einer Lichtfarbe, einer zeitlichen Variation der Beleuchtung und/oder mindestens einer visuellen Information im Beleuchtungsbereich erfolgt und dabei an die Sichtverhältnisse angepasst ist.

Zu markierende Objekte können Hinweisschilder, Kennzeichnungen, aber auch Kreuzungen oder Abzweigungen sein, die das Fahrzeug bei seiner Fahrt passiert oder nutzen soll.

Gefahrenstellen umfassen alle Arten von Hindernissen, die sich auf der Fahrbahn oder nahe der Fahrbahn befinden und das Fahrzeug und seine Insassen gefährden. Dazu zählen Schäden in der Fahrbahn ebenso, wie verunfallte Fahrzeuge, umgefallene Bäume, verlorene Transportgüter, die Fahrbahn kreuzende Tiere und dergleichen. Die zu markierenden Objekte und/oder Gefahrenstellen können durch die fahrzeugeigene Erfassung und/oder durch den Austausch mit externen Systemen bekannt sein.

Die Markierung kann auf verschiedene Weise verwirklicht werden. So kann eine zu markierende Stelle mittels einer lokalen Intensivierung der Beleuchtung und/oder durch die lokal begrenzte Ausleuchtung mit einer anderen Lichtfarbe erfolgen. Eine zeitliche Variation der Beleuchtung kann ein Pulsieren oder Blinken der Beleuchtung sein und insbesondere bei zunehmender Gefahr schneller werden.

Wird ein Objekt und/oder eine Gefahrenstelle mit einer visuellen Information markiert, ist dabei gemeint, dass mittels Symbolen, Piktogrammen, Schriftzeichen oder dergleichen eine für einen Fahrer lesbare oder verständliche Information übermittelt wird, indem sie auf die Fahrbahn beziehungsweise ein Objekt und/oder eine Gefahrenstelle projiziert wird. So können beispielsweise Richtungspfeile angezeigt werden, um ein Hindernis zu umfahren oder ein Warnzeichen auf die Fahrbahn projiziert werden, um die Annäherung an ein Schlagloch anzuzeigen.

Wesentlich ist dabei, dass diese Markierung angepasst an die Sichtverhältnisse geschieht. Dies spiegelt sich in der Lichtintensität, der Position der Markierung, insbesondere deren Abstand vom Fahrzeug und/oder der Lichtverteilung der Markierung wieder, die stets abhängig sind von den Sichtverhältnissen wie zuvor beschrieben. Die bereits ermittelten notwendigen Anpassungen der Beleuchtung an die Sichtverhältnisse können also auch für die Anpassung der Markierungen herangezogen werden.

Das Verfahren kann auch dahingehend weitergebildet sein, dass eine Eigenblendung des Fahrers mittels einer Innenraumüberwachung des Fahrzeugs erfasst und/oder mittels der fahrzeugeigenen Umfelderkennung bestimmt wird und die Beleuchtung angepasst wird, um die Blendung des Fahrers zu reduzieren.

Eine Eigenblendung des Fahrers entsteht, wenn die Beleuchtung an Regen, Schnee, Nebel und/oder Partikeln in der Luft stark gestreut wird, insbesondere weil die Ausrichtung beziehungsweise ein Schwerpunkt des Lichtes und/oder die Intensität des Lichts ungünstig gewählt oder angepasst ist. Sie lässt sich unter anderem an der Reaktion des Fahrers erkennen, die durch die Innenraumüberwachung des Fahrzeugs erfasst wird. Eine Eigenblendung führt üblicherweise oder zumindest häufig zu einem Zusammenkneifen der Augen, zu einem Abdecken der Augen mit einer Hand und/oder zu einem Wechsel der Blickrichtung. Auch die Pupillenreaktion in den Augen des Fahrers lässt eine Blendung erkennen.

Alternativ oder zusätzlich kann anhand der Erfassung der Sichtverhältnisse und der dabei ermittelten Lichtwerte, vor allem hinsichtlich der Intensität und der Streuung des vom Fahrzeug emittierten Lichtes, auf eine Eigenblendung geschlossen werden.

Durch die Ausgestaltung des erfindungsgemäßen Verfahrens mit einem lernenden System, kann auch anhand früherer Anpassungen der Beleuchtung und der dazu erfassten Informationen abgeschätzt werden, ob eine Eigenblendung besteht oder bestehen könnte.

Wird eine Eigenblendung erfasst oder wird mit hoher Wahrscheinlichkeit auf eine Eigenblendung des Fahrers geschlossen, wird die Beleuchtung angepasst, um die Eigenblendung zu reduzieren oder ganz zu beseitigen. Dazu können die bereits wiederholt ausgeführten Eigenschaften der Beleuchtung verändert werden, bis die Erfassung der Sichtverhältnisse, der Reaktionen des Fahrers und gegebenenfalls die erlernten Lichtwerte ergeben, dass keine Eigenblendung besteht oder zumindest sehr unwahrscheinlich ist.

Neben einer Eigenblendung des Fahrers sollte auch die Blendung anderer Verkehrsteilnehmer vermieden werden. Andere Verkehrsteilnehmer könnten Fußgänger oder andere Autofahrer sein. Dazu soll die Beleuchtung, insbesondere die Lichtverteilung, angepasst werden, um eine Blendung mindestens eines anderen Verkehrsteilnehmers zu vermeiden. Ob ein oder mehrere andere Verkehrsteilnehmer geblendet werden, ist abhängig von deren Position beziehungsweise Bewegung in Relation zu der mit dem erfindungsgemäßen Verfahren bereitgestellten Blendung. Mittels der fahrzeugeigenen Umfelderkennung können andere Verkehrsteilnehmer, also ihre Position und Bewegungsrichtung, erfasst werden und im Abgleich mit der bereitgestellten Beleuchtung bestimmt werden, ob eine Blendung mindestens eines anderen Verkehrsteilnehmers vorliegt oder vorliegen könnte. Auch kann anhand von Reflektionen und Streuung von Licht an Oberflächen, insbesondere feuchten Oberflächen, eine Blendung bestimmt werden. Alternativ oder zusätzlich kann mittels C2C-Kommunikation von dem mindestens einen anderen Verkehrsteilnehmer übermittelt werden, ob eine Blendung vorliegt.

Im Fall einer bestehenden Blendung soll die Beleuchtung so angepasst werden, dass diese ausgeräumt wird. Dies kann durch eine Anpassung der Lichtintensität und/oder des mindestens einen Lichtschwerpunktes erfolgen, hauptsächlich aber durch eine Anpassung der Lichtverteilung. So kann die Lichtverteilung derart verändert werden, dass die den geblendeten Verkehrsteilnehmer ausspart.

Es können Situationen auftreten, bei denen eine Anpassung der Beleuchtung nicht mehr erfolgen kann, also vor allem keine ausreichende Beleuchtung für bestehende Sichtverhältnisse bei der zu diesem Zeitpunkt bestehenden Fahrweise bereitgestellt werden kann. Dies ist vor allem dann der Fall, wenn die Geschwindigkeit des Fahrzeugs zu hoch für die vorherrschenden Sichtverhältnisse ist. Dafür ist in dieser Ausgestaltung des erfindungsgemäßen Verfahrens vorgesehen, dass dem Fahrer akustische und/oder visuelle Hinweise übermittelt werden und/oder ein Eingriff in die Fahrzeugsteuerung erfolgt, wenn die Beleuchtung bei der bestehenden Fahrweise nicht angepasst werden kann.

Fährt der Fahrer also zu schnell bei schlechter Sicht und ergibt die Bestimmung der Sichtverhältnisse, dass die Sichtweite und die Lichtverhältnisse für eine Fahrt in dieser Geschwindigkeit nicht ausreichen, soll dem Fahrer mittels akustischer Signale wie Warntönen oder eine Ansage durch einen Sprachassistenten oder dergleichen mitgeteilt werden, dass er zu schnell ist und die Geschwindigkeit anpassen soll. Alternativ oder zusätzlich sollen visuelle Signale den gleichen Informationsgehalt übermitteln. Visuelle Signale können Warnleuchten, Anzeigen auf einer Anzeigeeinrichtung des Fahrzeugs und/oder Warnsignale, die auf die Fahrbahn projiziert werden, sein.

Alternativ oder zusätzlich kann ein Eingriff in die Fahrzeugsteuerung vorgesehen sein, insbesondere dann, wenn der Fahrer die Geschwindigkeit nicht angepasst hat. Ein Eingriff in die Fahrzeugsteuerung soll vor allem als Anpassung der Fahrgeschwindigkeit durch das Fahrzeug und damit eine Überstimmung der Fahrtentscheidungen des Fahrers verstanden werden.

Ziel soll es dabei sein, dass die Geschwindigkeit und/oder die Fahrweise so angepasst wird, dass sie den Sichtverhältnissen und der möglichen beziehungsweise unter den vorherrschenden Bedingungen technisch machbaren Anpassung der Beleuchtung angemessen ist.

Im Hinblick auf das zunehmende Bedürfnis nach Nachhaltigkeit in der individuellen Mobilität, aber auch im Hinblick auf die Reichweite eines Fahrzeuges, vor allem wenn dieses ein Elektrofahrzeug ist, soll die Anpassung der Beleuchtung unter Berücksichtigung eines Energieverbrauches erfolgen. So könnte beispielsweise eine Beleuchtung, die als Nebelschlussleuchte wirkt, abgeschaltet oder zumindest auf einen gesetzlich zulässigen Minimalwert reduziert werden, wenn dem Fahrzeug kein anderer Verkehrsteilnehmer folgt. Damit kann der Energieverbrauch während der Fahrt reduziert werden. Gleichzeitig wird weniger Abwärme durch die Beleuchtungseinrichtung erzeugt. Diese Ausgestaltung zielt also vor allem darauf ab, die Beleuchtung des Fahrzeugs vorrübergehend um ein vertretbares Maß zu reduzieren, wenn einzelne Beleuchtungsaufgaben nicht notwendigerweise verwirklicht werden müssen. Darunter kann auch ein Anzeigen einer Richtungsänderung verstanden werden, das Unterlassen werden könnte oder hinsichtlich der konkret bereitgestellten Beleuchtung für die Richtungsanzeige reduziert werden könnte, wenn keine anderen Verkehrsteilnehmer in Sichtweite sind. So könnte beim Blinken das Blinklicht an einer Seitenfläche des Fahrzeugs nicht mit betrieben werden, wenn kein anderes Fahrzeug in der Umgebung erfasst wird. Auch könnte bei einem animierten Blinker, bei dem einzelne Beleuchtungssegmente nacheinander erleuchtet werden, um die gewünschte oder beabsichtigte Fahrtrichtung anzuzeigen, die Anzahl der zu beleuchtenden Segmente reduziert oder auf die Animation verzichtet werden.

Erfindungsgemäß ist auch ein Fahrzeug beansprucht, das eine Beleuchtungseinrichtung aufweist, die eine Beleuchtung mittels einzeln ansteuerbarer Lichtpunkte bereitstellt. Dieses Fahrzeug soll ferner ein System, beispielsweise in Form einer Steuereinrichtung, die die Beleuchtungseinrichtung(en) des Fahrzeugs ansteuern kann, aufweisen, das ausgebildet und eingerichtet ist, das erfindungsgemäße Verfahren auszuführen.

Das erfindungsgemäße Verfahren und seine Verwendung in Fahrzeugen erlauben es, in Abhängigkeit von Sichtverhältnissen und weiteren Informationen die Beleuchtung eines Fahrzeugs so anzupassen, dass die Sichtverhältnisse verbessert werden. Damit kann unter anderem die Funktion einer Nebelbeleuchtung ersetzt werden, so dass keine Nebelscheinwerfer und/oder Nebelschlussleuchten am Fahrzeug vorgehalten werden müssen. Da die Erfassung der Sichtverhältnisse und der weiteren Informationen stetig wiederholt wird, kann schnell auf veränderliche Sichtverhältnisse und äußere Einflüsse reagiert werden, um stets die optimale Beleuchtung bereitzustellen. Da mit dem erfindungsgemäßen Verfahren der Fahrbahnverlauf prädiktiv angezeigt werden kann und/oder die Aufmerksamkeit des Fahrers so beeinflusst werden kann, dass er in seiner Fahraufgabe unterstützt wird, wird die Sicherheit beim Fahren im Nebel, Regen oder Gischt erhöht und die Sichtbarkeit des Fahrzeugs verbessert.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung des erfindungsgemäßen Verfahrens anhand bestehender Sichtverhältnisse und einem Beleuchtungsschema, und
- Figur 2: schematisch eine Verkehrssituation mit einer angepassten Beleuchtung.

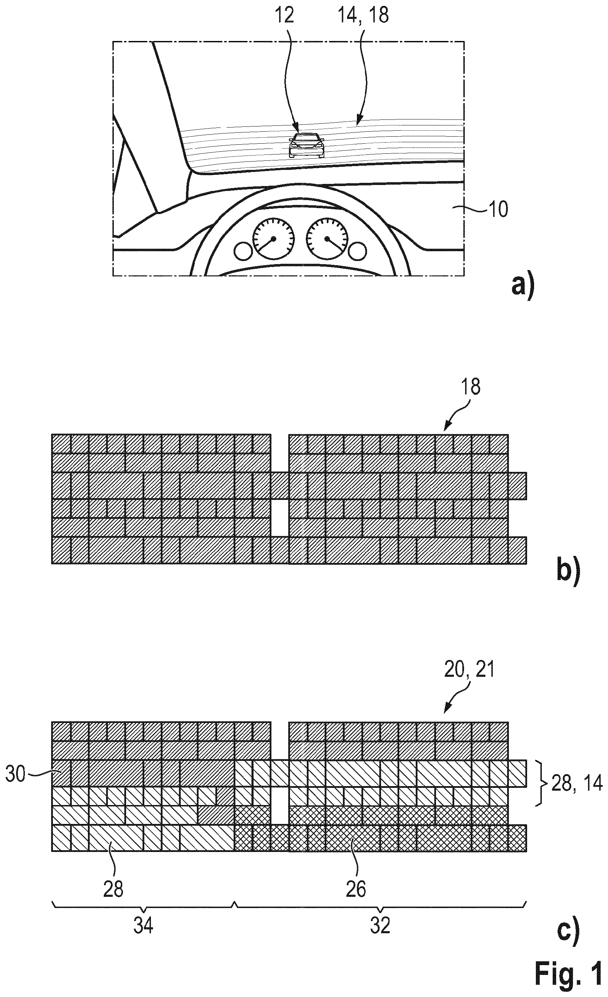

Figur 1 zeigt schematisch ein Szenario zur Beleuchtung einer Straße ohne und mit dem erfindungsgemäßen Verfahren. In Figur 1a ist der Blick aus einem Fahrzeug 10 zu erkennen, bei dem eine Nebelbank 14 die Sicht beeinträchtigt. Hinter der Nebelbank 14 ist ein anderer Verkehrsteilnehmer 12, ein entgegenkommendes Fahrzeug, erkennbar.

Figur 1b zeigt eine unangepasste Lichtverteilung 18, bei der eine einheitliche Lichtintensität über die gesamte beleuchtete Fläche eingestellt ist. In der Folge wird die Nebelbank 14 direkt angestrahlt (Figur 1a), was durch die Reflektion und Streuung des Lichts an der Feuchtigkeit im Nebel zu einer Eigenblendung des Fahrers führt und der dahinter befindliche andere Verkehrsteilnehmer 12 nur schwerlich zu erkennen ist.

Figur 1c zeigt hingegen, wie eine angepasste Beleuchtung 20 aussehen kann, die mit dem erfindungsgemäßen Verfahren bestimmt wurde. Um dieses Beleuchtungsschema zu erlangen, wurden zunächst mit der Umfelderkennung des Fahrzeugs 10 die Sichtverhältnisse vor dem Fahrzeug 10 beziehungsweise um das Fahrzeug 10 erfasst. Dabei konnte bestimmt werden, das Nebel herrscht und es im Übrigen dunkel ist. Ebenso wurde die Notwendigkeit bestimmt, die Funktionalität einer Nebelbeleuchtung bereitzustellen, insbesondere eines Nebelscheinwerfers.

Außerdem werden Fahrtinformationen und zusätzliche Umgebungsinformationen analysiert. Bei den Fahrtinformationen wird auf die Navigationsdaten des Fahrzeugs 10 und die Geschwindigkeit des Fahrzeugs 10 zugegriffen, die von fahrzeugeigenen Systemen bereitgestellt werden. Zudem kann mit der fahrzeugeigenen Sensorik und Kameras festgestellt werden, dass die Verkehrsdichte gering ist.

Hinsichtlich der Umfeldinformationen wird in die Anpassung der Beleuchtung einbezogen, dass die Strecke ländlich verläuft und damit keine eigene Beleuchtung aufweist. Die Straße ist eine Landstraße und zweispurig ausgebildet. Zudem kann einbezogen werden, dass nahe der Straße ein Gewässer verläuft und somit die Gefahr von Nebel bei bestimmten Witterungsverhältnissen hoch ist. Diese Informationen können beispielsweise aus Kartenbeziehungsweise Navigationsdaten gewonnen werden.

Anhand der Sichtverhältnisse, den Fahrtinformationen und den zusätzlichen Umgebungsinformationen kann eine angepasste Beleuchtung 20 bestimmt werden, bei der eine Lichtverteilung 21 gewählt wird, die den vorgenannten Informationen Rechnung trägt. So weist die Lichtverteilung 21 Bereiche mit geringer Lichtintensität 30, Bereiche mit mittlerer Lichtintensität 28 und Bereiche mit hoher Lichtintensität 26 auf. Die Bereiche 26, 28, 30 sind jeweils aus einer Vielzahl von Teilflächen zusammengesetzt, die beispielhaft und stark vereinfacht mit Rechtecken veranschaulicht sind. Diese einzelnen Teilflächen können jeweils individuell ausgeleuchtet werden, da die Beleuchtungseinrichtung des Fahrzeugs 10 zur Bereitstellung digitalen Lichtes, also zur Beleuchtung von einzelnen Lichtpunkte ausgebildet ist, wobei dies mithilfe einer Steuereinrichtung gesteuert wird.

Die Bereiche 26, 28, 30 werden dabei so gewählt und angeordnet, dass nur Licht mit einer mittleren Intensität 28 auf die Nebelbank 14 trifft, um eine Eigenblendung des Fahrers zu vermeiden. Zudem wird für die Ausleuchtung der Gegenfahrbahn 34 Licht einer mittleren Intensität 28 bereitgestellt, um andere Verkehrsteilnehmer 12 dort nicht zu blenden. Lediglich der Bereich der eigenen Fahrbahn 32 unmittelbar vor dem Fahrzeug 10 ist mit Licht hoher Intensität 26 ausgeleuchtet, damit der Fahrer des Fahrzeugs 10 den Straßenverlauf erkennen kann und gegebenenfalls auch das Vorhandensein von Gefahrenquellen oder Straßenschäden.

Verläuft die Fahrbahn 32 in einer Kurve, ist dies aus den Navigationsdaten und der dort geplanten zu fahrenden Route bekannt, so dass der Bereich des Lichts mit hoher Intensität 26 so seitlich verschoben werden kann und der Verlauf der Kurve prädiktiv angezeigt wird. Der Fahrer kann so frühzeitig auch bei kurzer Sichtweite erkennen, dass die Straße in einer Kurve verläuft.

Bei weiterer Fortbewegung des Fahrzeugs wird die Erfassung der Sichtverhältnisse, der Fahrt- und Umgebungsinformationen stetig wiederholt und geprüft, ob und wie die Beleuchtung weiter angepasst werden soll. Dabei kommt auch der weitere Verkehrsteilnehmer 12 näher und eine Blendung an ihm soll ausgeschlossen werden. Daher werden mittels der Umfelderkennung des Fahrzeugs 10 die Reflektionen und Streuung des emittierten Lichtes erfasst und ausgewertet, um zu bestimmen, ob eine Blendung des anderen Verkehrsteilnehmers 12 vorliegt. Zusätzlich kann dieser mittels C2C-Kommunikation übermitteln, wenn eine Blendung besteht.

Bei Auftreten der Blendung wird die Intensitätsverteilung der angepassten Beleuchtung 20 dann so verändert, dass die Beleuchtung im Bereich des anderen Verkehrsteilnehmers 12 mit geringer Intensität erfolgt oder gar bereichsweise abgeschaltet wird (nicht gezeigt), um eine Blendung zu vermeiden.

Außerdem wird beim Annähern an die Nebelbank 14 mittels Innenraumbeobachtung und insbesondere einem Pupillentracking beim Fahrer des Fahrzeugs 10 überwacht, ob die angepasste Beleuchtung 20 zu einer Eigenblendung des Fahrers führt. Dies kann durch das Annähern an die Nebelbank 14 oder durch zunehmend dichteren Nebel geschehen. Wird anhand der Reaktion des Fahrers, gegebenenfalls mit Unterstützung der fahrzeugeigenen Umfelderkennung, eine Eigenblendung erkannt, wird die Beleuchtung so angepasst, das weniger Licht auf die Nebelbank 14 trifft und die Gefahr der Eigenblendung verringert wird.

Die Erfassung von Sichtverhältnissen, Fahrtinformationen und zusätzlichen Umgebungsinformationen, die daraus ermittelte angepasste Beleuchtung 20 und der Effekt auf die Sichtverhältnisse die bei der fortwährenden Erfassung feststellbar ist, werden unter Berücksichtigung des zeitlichen Bezugs und der Reaktion des Fahrers ausgewertet. Anhand der Auswertung wird bestimmt, ob eine Anpassung der Beleuchtung in Abhängigkeit von den vorherrschenden Lichtverhältnissen einen positiven oder negativen Effekt hatte. Diese Auswertung ist die Basis für eine Optimierung der Beleuchtungsanpassung des erfindungsgemäßen Verfahrens.

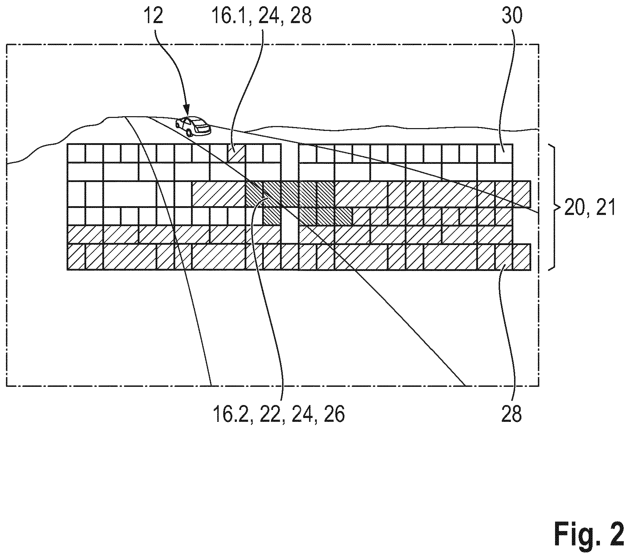

Figur 2 zeigt eine Straße in Nebel, wobei ein anderer Verkehrsteilnehmer 12 in einigem Abstand voraus fährt. Auch in dieser Situation soll die Beleuchtung mit dem erfindungsgemäßen Verfahren angepasst werden. Dies erfolgt analog zum vorherigen Ausführungsbeispiel, daher werden nur die Unterschiede und Besonderheiten ausgeführt.

Die Straße weist mindestens zwei Schäden oder Schlaglöcher 16.1 und 16.2 auf. Sie sind aus der Kommunikation mit externen Systemen (C2C, C2X) sowie Kartendaten bekannt, wurden aber auch mit der fahrzeugeigenen Umfelderkennung erfasst. Die angepasste Beleuchtung 20 weist auch hier eine Lichtverteilung 21 mit Bereichen niedriger Intensität 30, mittlerer Intensität 28 und hoher Intensität 26 auf. Dabei wird die Verteilung 21 so geregelt, dass der Vordermann 12 nicht über seine Spiegel geblendet wird, indem die Fahrbahn hinter ihm mit geringer Intensität 30 ausgeleuchtet wird. Für die Fahrt des Fahrzeugs 10 wird der Bereich unmittelbar vor dem Fahrzeug 10 mit hoher Intensität 26 über die gesamte Breite ausgeleuchtet, da die Straße, wie beschrieben, mindestens zwei Schäden aufweist.

Damit der Fahrer des Fahrzeugs 10 die bekannten Schlaglöcher 16.1 und 16.2 frühzeitig erkennen und seine Fahrweise anpassen kann, werden diese mit Lichtschwerpunkten 22 markiert. Diese Schwerpunkte 22 entsprechen Markierungen 24 und erfolgen durch eine lokale Erhöhung der Intensität gegenüber dem umgebenden Intensitätsniveau. So ist rund um Schlagloch 16.2 bereits Licht mit einer mittleren Intensität 28 bereitgestellt, da es sonst wegen des Nebels zu einer Eigenblendung des Fahrers kommen könnte. Im Bereich des Schlaglochs 16.2 wird die Markierung 24 mit Licht hoher Intensität 26 verwirklicht. Die Markierung 24 an diesem Schlagloch 16.2 könnte alternativ oder zusätzlich auch in einer anderen Farbe und/oder mit einem Pulsieren hervorgehoben werden.

Schlagloch 16.1 liegt weiter entfernt und damit im Bereich mit einer Ausleuchtung geringer Intensität 30. Die Markierung 24 des dortigen Schlagloches 16.1 erfolgt daher mit Licht mittlerer Intensität 28, um eine Blendung des Fahrers und der anderen Verkehrsteilnehmers 12 zu vermeiden.

Da eine Fahrt über eine solche schadhafte Strecke bei Nebel und Dunkelheit möglicherweise zu Stress und/oder Angst des Fahrers führen kann und damit seine Fahrweise gegebenenfalls beeinträchtigt wird, wird sein Zustand kontinuierlich mittels der Innenraumüberwachung des Fahrzeugs 10 und Sensorik am Lenkrad überwacht. Um das Stresslevel zu senken, kann bei Bedarf die Lichtfarbe angepasst werden. Außerdem kann ein akustisches oder ein visuelles Signal übermittelt werden, damit der Fahrer die Geschwindigkeit reduziert. Letzteres sollte vor allem dann erfolgen, wenn der Nebel dichter wird und die für die vorherrschende Geschwindigkeit notwendige Sichtweite nicht mehr durch die Beleuchtungsanpassung sichergestellt werden kann.

Da dem Fahrzeug 10 kein anderer Verkehrsteilnehmer folgt, kann im Übrigen die Nebelbeleuchtung nach hinten (nicht gezeigt) abgeschaltet werden, um Energie zu sparen.

### Bezugszeichenliste

- 10: Fahrzeug
- 12: anderer Verkehrsteilnehmer
- 14: Nebelbank
- 16: Straßenschäden
- 18: unangepasste Beleuchtung
- 20: angepasste Beleuchtung
- 21: Lichtverteilung
- 22: Lichtschwerpunkt
- 24: Markierung
- 26: Licht höherer Intensität
- 28: Licht mittlerer Intensität
- 30: Licht geringerer Intensität
- 32: eigene Fahrbahn
- 34: Gegenfahrbahn

## Patentansprüche

1. Verfahren zur Bereitstellung einer an Sichtverhältnisse angepassten Beleuchtung (20) eines Fahrzeugs (10) mit einer Beleuchtungseinrichtung, die eine Beleuchtung mittels einzeln ansteuerbarer Lichtpunkte bereitstellt, wobei mittels einer fahrzeugeigenen Umfelderkennung die Sichtverhältnisse während der Fahrt des Fahrzeugs (10) erfasst werden, und aus den erfassten Sichtverhältnissen, sowie Fahrtinformationen und/oder zusätzlichen Umgebungsinformationen die Beleuchtung adaptiv hinsichtlich einer Lichtverteilung (21), mindestens einem Lichtschwerpunkt (22) und/oder einer Lichtintensität angepasst wird, um einen Fahrbahnverlauf prädiktiv anzuzeigen und/oder die Aufmerksamkeit eines Fahrers des Fahrzeugs (10) zu beeinflussen,
**dadurch gekennzeichnet, dass**
die Anpassung der Beleuchtung an die Sichtverhältnisse unter Berücksichtigung eines Zustandes des Fahrers unter Verwendung von Informationen mobiler Endgeräte erfolgt und
mittels einer Auswerteeinheit das Zusammenwirken von erfassten Sichtverhältnissen und Informationen zum Zustand des Fahrers, sowie Fahrtinformationen und/oder zusätzlichen Umgebungsinformationen mit der adaptiven Anpassung der Beleuchtung erfasst und ausgewertet wird, um anhand der Auswerteergebnisse die adaptive Anpassung der Beleuchtung zu optimieren.

2. Verfahren nach Anspruch 1, **dadurch gekennzeichnet, dass** Fahrtinformationen und/oder Umgebungsinformationen
- durch mindestens ein fahrzeugeigenes System erfasst und bereitgestellt werden und/oder
- mit externen Systemen ausgetauscht werden.

3. Verfahren nach Anspruch 1 oder 2, **dadurch gekennzeichnet, dass** die Beleuchtung angepasst wird, um Objekte und/oder Gefahrenstellen zu markieren, wobei die Markierung (24) mittels Anpassung der Lichtintensität, einer Lichtfarbe, einer zeitlichen Variation der Beleuchtung und/oder mindestens einer visuellen Information im Beleuchtungsbereich erfolgt und dabei an die Sichtverhältnisse angepasst ist.

4. Verfahren nach einem der vorhergehenden Ansprüche, **dadurch gekennzeichnet, dass** eine Eigenblendung des Fahrers mittels einer Innenraumüberwachung des Fahrzeugs (10) erfasst und/oder mittels der fahrzeugeigenen Umfelderkennung bestimmt wird und die Beleuchtung angepasst wird, um die Blendung des Fahrers zu reduzieren.

5. Verfahren nach einem der vorhergehenden Ansprüche, **dadurch gekennzeichnet, dass** die Beleuchtung, insbesondere die Lichtverteilung (21), angepasst wird, um eine Blendung mindestens eines anderen Verkehrsteilnehmers (12) zu vermeiden.

6. Verfahren nach einem der vorhergehenden Ansprüche, **dadurch gekennzeichnet, dass** dem Fahrer akustische und/oder visuelle Hinweise übermittelt werden und/oder ein Eingriff in die Fahrzeugsteuerung erfolgt, wenn die Beleuchtung bei der bestehenden Fahrweise nicht angepasst werden kann.

7. Verfahren nach einem der vorhergehenden Ansprüche, **dadurch gekennzeichnet, dass** die Anpassung der Beleuchtung unter Berücksichtigung eines Energieverbrauches erfolgt.

8. Fahrzeug (10) mit einer Beleuchtungseinrichtung, die eine Beleuchtung mittels einzeln ansteuerbarer Lichtpunkte bereitstellt und mit einem System, das ausgebildet und eingerichtet ist, ein Verfahren nach einem der vorhergehenden Ansprüche auszuführen.

## Claims

1. Method for providing lighting (20) of a vehicle (10) that is adapted to visibility conditions, which vehicle comprises a lighting device which provides lighting by means of individually controllable light points, the visibility conditions being detected during the journey of the vehicle (10) by means of an in-vehicle environmental detection system, and the lighting being adaptively adjusted regarding a light distribution (21), at least one light center position (22) and/or a light intensity from the detected visibility conditions, as well as journey information and/or additional environmental information, to predictively display a roadway course and/or to influence the attention of a driver of the vehicle (10),
**characterized in that**
the lighting is adjusted to the visibility conditions taking into account a condition of the driver using information from mobile terminals, and
the interaction of the detected visibility conditions and information about the condition of the driver, as well as journey information and/or additional environmental information with the adaptive adjustment of the lighting is detected and evaluated by means of an evaluation unit to optimize the adaptive adjustment of the lighting based on the evaluation results.

2. Method according to claim 1, **characterized in that** the journey information and/or environmental information
- is detected and provided by at least one in-vehicle system and/or
- is exchanged with external systems.

3. Method according to claim 1 or claim 2, **characterized in that** the lighting is adjusted to mark objects and/or hazard points, the marking (24) being carried out by means of adjusting the light intensity, a light color, a temporal variation of the lighting and/or at least one piece of visual information in the lighting region and being adapted to the visibility conditions.

4. Method according to any of the preceding claims, **characterized in that** the glare experienced by the driver is detected by means of an interior monitoring system of the vehicle (10) and/or determined by means of the in-vehicle environmental detection system **and in that** the lighting is adjusted to reduce the glare experienced by the driver.

5. Method according to any of the preceding claims, **characterized in that** the lighting, in particular the light distribution (21), is adjusted to avoid dazzling at least one other road user (12).

6. Method according to any of the preceding claims, **characterized in that** acoustic and/or visual signals are transmitted to the driver and/or an intervention takes place in the on-board vehicle control if the lighting cannot be adjusted given the existing driving style.

7. Method according to any of the preceding claims, **characterized in that** the lighting is adjusted taking energy consumption into account.

8. Vehicle (10) having a lighting device which provides lighting by means of individually controllable light points and having a system which is designed and configured to carry out a method according to any of the preceding claims.

## Revendications

1. Procédé permettant de fournir un éclairage (20) d'un véhicule (10) adapté aux conditions de visibilité, comportant un dispositif d'éclairage qui fournit un éclairage au moyen de points lumineux pouvant être commandés individuellement, dans lequel les conditions de visibilité sont détectées pendant la conduite du véhicule (10) au moyen d'une reconnaissance de l'environnement propre au véhicule, et, à partir des conditions de visibilité détectées ainsi que d'informations de conduite et/ou d'informations d'environnement supplémentaires, l'éclairage est adapté de manière adaptative en ce qui concerne une répartition de la lumière (21), au moins un centre de gravité de la lumière (22) et/ou une intensité lumineuse, afin d'indiquer de manière prédictive un tracé de la voie de circulation et/ou d'influencer l'attention d'un conducteur du véhicule (10),
**caractérisé en ce que**
l'adaptation de l'éclairage aux conditions de visibilité en tenant compte d'un état du conducteur est effectué en utilisant des informations provenant de terminaux mobiles et
au moyen d'une unité d'évaluation, l'interaction de conditions de visibilité détectées et d'informations concernant l'état du conducteur ainsi que d'informations de conduite et/ou d'informations d'environnement supplémentaires avec l'adaptation de manière adaptative de l'éclairage est détectée et évaluée afin d'optimiser l'adaptation de manière adaptative de l'éclairage à l'aide des résultats d'évaluation.

2. Procédé selon la revendication 1, **caractérisé en ce que** des informations de conduite et/ou des informations d'environnement
- sont détectées et fournies par au moins un système embarqué et/ou
- sont échangées avec des systèmes externes.

3. Procédé selon la revendication 1 ou 2, **caractérisé en ce que** l'éclairage est adapté pour marquer des objets et/ou des zones dangereuses, dans lequel le marquage (24) est effectué au moyen d'une adaptation de l'intensité lumineuse, d'une couleur de lumière, d'une variation temporelle de l'éclairage et/ou d'au moins des informations visuelles dans la zone d'éclairage et est ainsi adapté aux conditions de visibilité.

4. Procédé selon l'une des revendications précédentes,
**caractérisé en ce qu'un** autoéblouissement du conducteur est détecté au moyen d'une surveillance de l'habitacle du véhicule (10) et/ou est déterminé au moyen de la reconnaissance d'environnement propre au véhicule et l'éclairage est adapté pour réduire l'éblouissement du conducteur.

5. Procédé selon l'une des revendications précédentes,
**caractérisé en ce que** l'éclairage, en particulier la répartition de la lumière (21), est adapté pour éviter d'éblouir au moins un autre usager de la route (12).

6. Procédé selon l'une des revendications précédentes,
**caractérisé en ce que** des indications acoustiques et/ou visuelles sont transmises au conducteur et/ou une intervention est effectuée dans la commande de véhicule si l'éclairage ne peut pas être adapté au mode de conduite actuel.

7. Procédé selon l'une des revendications précédentes,
**caractérisé en ce que** l'adaptation de l'éclairage est effectué en tenant compte d'une consommation d'énergie.

8. Véhicule (10) comportant un dispositif d'éclairage qui fournit un éclairage au moyen de points lumineux pouvant être commandés individuellement et comportant un système qui est réalisé et configuré pour mettre en œuvre un procédé selon l'une des revendications précédentes.
